# EUROPEAN PATENT APPLICATION

(11) **EP 4 808 131 A1**
(43) Date of publication of application: **16.09.2026**
(21) Application number: 24887746.6
(22) Date of filing: 22.10.2024
(51) Int. Cl.: H04N 21/258

(54) **TELEVISION LOGIN METHOD AND APPARATUS, AND ELECTRONIC DEVICE AND COMPUTER STORAGE MEDIUM**

(30) Priority: 07.11.2023 CN 202311479183
(71) Applicant: Shenzhen TCL New Technology Co., Ltd, Shenzhen, Guangdong 518052 (CN)
(72) Inventor: XU, Wenpeng, Shenzhen, Guangdong 518052 (CN)
(74) Representative: Murgitroyd & Company
(86) International application number: PCT/CN2024/126381
(87) International publication number: WO 2025/098133

(57) **Abstract**

The present application relates to the technical field of information interaction. Disclosed are a television login method and apparatus, and an electronic device and a computer storage medium. The method comprises: sending to a cloud server a login information application which carries username information, such that the cloud server generates random login information on the basis of the login information application; sending to a remote controller of a television terminal the random login information, which is returned by the cloud server, such that the remote controller encrypts the random login information, so as to obtain encrypted login information; receiving the encrypted login information, which is returned by the remote controller, and generating a login request on the basis of the username information and the encrypted login information; and sending the login request to the cloud server, such that the cloud server verifies the login request, and when login success information returned by the cloud server is received, determining that the login via the username information is successful. The present application allows a user to log in efficiently and quickly on a television terminal.

## Description

This application claims priority to Chinese Patent Applications No. 202311479183.5, filed on November 7, 2023 and entitled "TELEVISION LOGIN METHOD AND APPARATUS, AND ELECTRONIC DEVICE AND COMPUTER STORAGE MEDIUM". The entire disclosures of the above application are incorporated herein by reference.

### TECHNICAL FIELD

The present application relates to the technical field of information interaction, and in particular, to a television login method, an apparatus, an electronic device, and a computer storage medium.

### BACKGROUND TECHNOLOGY

With the rapid promotion of smart devices, more and more people choose smart homes to replace traditional homes. At present, login on a television mainly adopts a combination of a mobile phone number and a verification code, or a combination of a mobile phone number and a password, or a login manner of scanning a code by a third party.

However, whether using the combination of a mobile phone number and a verification code, or the combination of a mobile phone number and a password, the login manner requires a user to manually input the verification code or the password; when the user logs in by scanning a code through a third party, the user also needs to authorize the login, and the operation is cumbersome. As a result, a technical problem that television login is not efficient and convenient enough is caused.

### SUMMARY OF INVENTION

Embodiments of the present application provide a television login method, an apparatus, an electronic device, and a computer storage medium, which can solve the technical problem that television login is not efficient and convenient enough.

Embodiments of the present application provide a television login method, applied to a television terminal, comprising:
Sending a login information application carrying username information to a cloud server, so that the cloud server generates random login information according to the login information application.

Sending the random login information returned by the cloud server to a remote controller of the television terminal, so that the remote controller encrypts the random login information to obtain encrypted login information.

Receiving the encrypted login information returned by the remote controller, and generating a login request according to the username information and the encrypted login information.

Sending the login request to the cloud server, so that the cloud server verifies the login request, and when login success information returned by the cloud server is received, determining that login of the username information is successful.

Further, before sending the login information application carrying username information to the cloud server, the method comprises:
Establishing a communication connection between the television terminal and the remote controller, and generating binding request information.

Sending the binding request information to the remote controller, so that the remote controller generates device authentication information corresponding to the binding request information when receiving the binding request information.

Receiving the device authentication information returned by the remote controller, and determining that binding between the television terminal and the remote controller is completed.

Further, the generating of the binding request information comprises:
Acquiring device characteristic information of the television terminal and a binding instruction.

Generating the binding request information according to the binding instruction and the device characteristic information.

Further, the acquiring of the device characteristic information of the television terminal comprises:
Acquiring a hardware identifier, a media access control address, and a processor address of the television terminal.

Concatenating the hardware identifier, the media access control address, and the processor address to obtain concatenated data, and performing a preset-length digest processing on the concatenated data to obtain the device characteristic information.

Further, after determining that binding between the television terminal and the remote controller is completed, the method comprises:
Sending a registration information application carrying the username information to a cloud server, so that the cloud server generates random registration information.

Receiving the random registration information returned by the cloud server, and sending the random registration information to the remote controller, so that the remote controller encrypts the random registration information to obtain encrypted registration information.

Receiving a decryption key and the encrypted registration information returned by the remote controller, and generating a registration request according to the username information, the decryption key, and the encrypted registration information.

Sending the registration request to the cloud server, so that the cloud server verifies the registration request, and when registration success information returned by the cloud server is received, determining that the user is successfully registered on the television terminal.

Further, after sending the random login information returned by the cloud server to the remote controller of the television terminal, the method comprises:
Acquiring stored device authentication information and key identifier information, and sending the device authentication information and the key identifier information to the remote controller, so that the remote controller verifies the device authentication information, and when the verification is successful, the remote controller acquires a key pair based on the key identifier information, and encrypts the random login information according to the key pair to obtain encrypted login information.

Embodiments of the present application provide a television login method, applied to a remote controller, comprising:
Receiving random login information sent by a television terminal, and acquiring key identifier information.

Searching for a stored key pair according to the key identifier information, and encrypting the random login information based on the key pair to obtain encrypted login information.

Returning the encrypted login information to the television terminal.

Correspondingly, embodiments of the present application provide a television login apparatus, comprising:
A first transmitter, configured to send a login information application carrying username information to a cloud server, so that the cloud server generates random login information according to the login information application.

A second transmitter, configured to send the random login information returned by the cloud server to a remote controller of the television terminal, so that the remote controller encrypts the random login information to obtain encrypted login information.

A receiver, configured to receive the encrypted login information returned by the remote controller, and generate a login request according to the username information and the encrypted login information.

A third transmitter, configured to send the login request to the cloud server, so that the cloud server verifies the login request, and when login success information returned by the cloud server is received, determine that login of the username information is successful.

In addition, embodiments of the present application further provide an electronic device, comprising a processor and a memory, wherein the memory stores a computer program, and the processor is configured to run the computer program stored in the memory to implement the television login method provided in the embodiments of the present application.

In addition, embodiments of the present application further provide a computer storage medium, wherein the computer storage medium stores a computer program, and the computer program is adapted to be loaded by a processor to perform any one of the television login methods provided in the embodiments of the present application.

In addition, embodiments of the present application further provide a computer program product, comprising a computer program, wherein the computer program, when executed by a processor, implements any one of the television login methods provided in the embodiments of the present application.

In the embodiments of the present application, by sending a login information application carrying username information to a cloud server, so that the cloud server generates random login information according to the login information application, login can be performed by means of the random login information, without the need to input other information such as a mobile phone number, thereby improving the login speed; thereafter, the random login information returned by the cloud server is sent to a remote controller of the television terminal, so that the remote controller encrypts the random login information to obtain encrypted login information, thereby realizing encryption of the random login information by the remote controller, and enabling user login without requiring the user to input a password under the premise of ensuring information security; thereafter, the encrypted login information returned by the remote controller is received, and a login request is generated according to the username information and the encrypted login information; the login request is sent to the cloud server, so that the cloud server verifies the login request, and when login success information returned by the cloud server is received, it is determined that login of the username information is successful, thereby realizing rapid login of the television terminal via the remote controller without requiring the user to input a password or a verification code, and improving the login speed of the user on the television terminal while ensuring login security, thereby enhancing the convenience of user login.

### BRIEF DESCRIPTION OF THE DRAWINGS

In order to more clearly illustrate the technical solutions in the embodiments of the present application, the drawings required for describing the embodiments will be briefly introduced below. It is apparent that the drawings described below are merely some embodiments of the present application, and for those skilled in the art, other drawings can also be obtained based on these drawings without creative effort.
FIG. 1 is a schematic flowchart of a television login method provided by the present application.
FIG. 2 is a schematic flowchart of another embodiment of the television login method provided by the present application.
FIG. 3 is a schematic flowchart of another embodiment of the television login method provided by the present application.
FIG. 4 is a schematic structural diagram of a television login apparatus provided by embodiments of the present application.
FIG. 5 is a schematic structural diagram of an electronic device provided by embodiments of the present application.

### DETAILED DESCRIPTION OF THE PREFERRED EMBODIMENTS

The technical solutions in the embodiments of the present application will be clearly and completely described below with reference to the accompanying drawings in the embodiments of the present application. Apparently, the described embodiments are only some embodiments of the present application, rather than all embodiments. Based on the embodiments of the present application, all other embodiments obtained by those skilled in the art without creative effort shall fall within the protection scope of the present application.

Embodiments of the present application provide a television login method, an apparatus, an electronic device, and a computer storage medium. The television login apparatus may be integrated in an electronic device, and the electronic device may be a server, or may be a television terminal or other devices.

The server may be an independent physical server, or may be a server cluster or a distributed system composed of multiple physical servers, or may be a cloud server that provides basic cloud computing services such as cloud services, cloud databases, cloud computing, cloud functions, cloud storage, network services, cloud communication, middleware services, domain name services, security services, network acceleration services (Content Delivery Network, CDN), as well as big data and artificial intelligence platforms.

The terminal may be a smart phone, a tablet computer, a notebook computer, a desktop computer, a smart speaker, a smart watch, and the like, but is not limited thereto. The terminal and the server may be directly or indirectly connected through wired or wireless communication manners, which are not limited in the present application.

In addition, in the embodiments of the present application, "a plurality of" refers to two or more. "First" and "second" in the embodiments of the present application are used for distinguishing description and shall not be understood as indicating or implying relative importance.

The following will be described in detail respectively. It should be noted that the order of description of the following embodiments does not constitute a limitation on the preferred order of the embodiments.

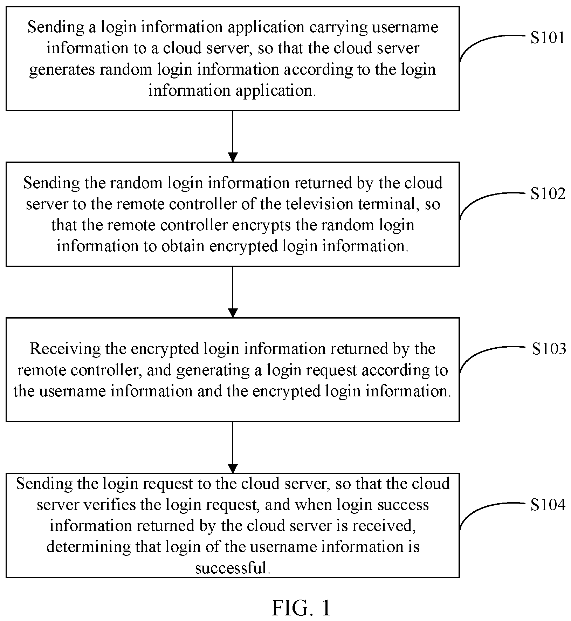

Please refer to FIG. 1. FIG. 1 is a schematic flowchart of a television login method provided in an embodiment of the present application. The television login method, applied to a television terminal, may comprise:
S101, sending a login information application carrying username information to a cloud server, so that the cloud server generates random login information according to the login information application.

In this embodiment, when the television terminal detects that a user inputs username information through a bound remote controller, a login information application carrying the username information is sent to the cloud server. The login information application is a request sent by the television terminal to the cloud server for obtaining random login information, and the username information is carried in the login information application. When the cloud server receives the login information application, it randomly generates a login challenge string, that is, random login information is obtained, wherein the login challenge string is a string of random numbers. Thereafter, the cloud server sends the random login information to the television terminal.

S102, sending the random login information returned by the cloud server to the remote controller of the television terminal, so that the remote controller encrypts the random login information to obtain encrypted login information.

In this embodiment, when the television terminal receives the random login information sent by the cloud server, prompt information for quick login is displayed on a screen of the television terminal. A user presses a quick login key on the remote controller based on the prompt information. When the remote controller receives the random login information, the remote controller encrypts the random login information to obtain encrypted login information. The encrypted login information may be obtained by encrypting the random login information using a locally stored key pair. Thereafter, the remote controller returns the encrypted login information to the television terminal.

S103, receiving the encrypted login information returned by the remote controller, and generating a login request according to the username information and the encrypted login information.

In this embodiment, when the television terminal receives the encrypted login information returned by the remote controller, the television terminal generates a login request according to the username information and the encrypted login information, wherein the login request is a request instruction carrying the username information and the encrypted login information.

S104, sending the login request to the cloud server, so that the cloud server verifies the login request, and when login success information returned by the cloud server is received, determining that login of the username information is successful.

In this embodiment, the television terminal sends a login request to the cloud server, and when the cloud server receives the login request, the cloud server verifies the login request. Specifically, when the cloud server obtains the login request, the cloud server parses the login request to obtain the username information and the encrypted login information; thereafter, the cloud server searches for a corresponding decryption key (such as a public key) according to the username information, and the decryption key is stored in the cloud server. Based on the decryption key, the encrypted login information is subjected to signature verification and decryption to obtain the random login information sent by the television terminal. The cloud server compares the decrypted random login information with the random login information corresponding to the username information cached in the cloud server. If the decrypted random login information is consistent with the random login information cached in the cloud server, the cloud server determines that the login request passes verification, and returns login success information to the television terminal. If the decrypted random login information is inconsistent with the cached random login information, the cloud server determines that the login request fails verification, and returns login failure information to the television terminal. When the television terminal receives the login success information returned by the cloud server, the television terminal determines that the user successfully logs in to the television terminal.

The television login method proposed in the present application is applied to a television terminal. By sending a login information application carrying username information to a cloud server, so that the cloud server generates random login information according to the login information application; thereafter, sending the random login information returned by the cloud server to a remote controller of the television terminal, so that the remote controller encrypts the random login information to obtain encrypted login information; thereafter, receiving the encrypted login information returned by the remote controller, and generating a login request according to the username information and the encrypted login information; sending the login request to the cloud server, so that the cloud server verifies the login request, and when login success information returned by the cloud server is received, determining that login of the username information is successful, thereby realizing rapid login of the television terminal via the remote controller without requiring the user to input a password or a verification code, and improving the login speed of the user on the television terminal while ensuring login security, thereby enhancing the convenience of user login. In addition, the rapid login method may also be applied to other home devices. By interaction between a home device and a control device (such as a remote controller), fast and convenient account login can be realized.

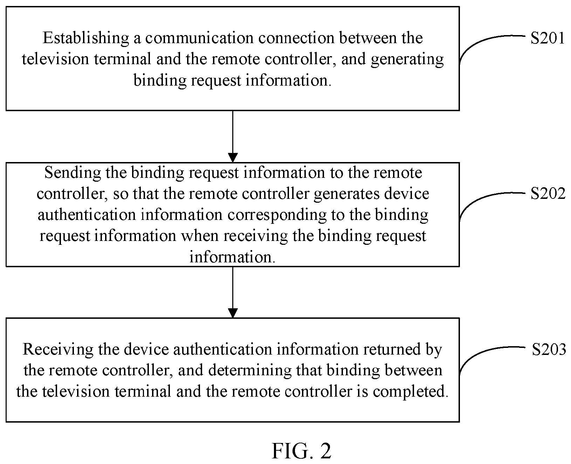

As shown in FIG. 2, FIG. 2 is a schematic flowchart of another embodiment of the television login method provided in the present application. In some embodiments of the present application, before sending the login information application carrying username information to the cloud server, the method comprises:
S201, establishing a communication connection between the television terminal and the remote controller, and generating binding request information.
S202, sending the binding request information to the remote controller, so that the remote controller generates device authentication information corresponding to the binding request information when receiving the binding request information.
S203, receiving the device authentication information returned by the remote controller, and determining that binding between the television terminal and the remote controller is completed.

In this embodiment, when the television terminal is powered on for the first time or performs account login, if the television terminal is not bound to a remote controller, prompt information for binding the remote controller is displayed on a screen of the television terminal. A user establishes a communication connection between the remote controller and the television terminal, such as a Bluetooth connection. When the connection between the television terminal and the remote controller is successful, the television terminal generates binding request information, wherein the binding request information carries device characteristic information of the television terminal. The television terminal sends the binding request information to the remote controller, and when the sending is successful, binding prompt information is displayed on the screen of the television terminal; the user operates the remote controller based on the prompt information. Thereafter, when the remote controller receives the binding request information, the remote controller encrypts (such as asymmetric encryption) and performs signature calculation on the binding request information to generate device authentication information, and returns the device authentication information to the television terminal. Specifically, when the remote controller receives the binding request information, the remote controller generates a corresponding key pair, wherein the key pair comprises a private key and a public key, wherein the private key may be used for encryption and the public key may be used for decryption; the remote controller stores the key pair locally, and encrypts the binding request information based on a key in the key pair to obtain the device authentication information; and sends the device authentication information to the television terminal. When the television terminal receives the device authentication information returned by the remote controller, the television terminal determines that binding with the remote controller is successful.

Further, when generating the key pair, the remote controller also generates key identifier information corresponding to the key pair, wherein the key identifier information is unique identification information corresponding to the key pair, and the key pair locally stored in the remote controller can be found based on the key identifier information; the remote controller sends the device authentication information and the key identifier information to the television terminal. The television terminal stores the device authentication information and the key identifier information. When a user performs account registration on the television terminal through the remote controller, the television terminal returns the device authentication information and the key identifier information to the remote controller, so that the remote controller verifies the device authentication information and searches for the key pair locally stored in the remote controller according to the key identifier information, thereby completing registration of the username information.

In this embodiment, by establishing a communication connection between the television terminal and the remote controller and generating binding request information; thereafter, sending the binding request information to the remote controller, and when it is determined that the device authentication information returned by the remote controller is received, determining that binding between the television terminal and the remote controller is completed, thereby realizing rapid binding between the television terminal and the remote controller.

In some embodiments of the present application, the generating of the binding request information comprises:
Acquiring device characteristic information of the television terminal and a binding instruction.

Generating the binding request information according to the binding instruction and the device characteristic information.

In this embodiment, when the television terminal generates the binding request information, device characteristic information of the television terminal and a binding instruction are acquired. The device characteristic information is device identification information of the television terminal, and the television terminal can be uniquely identified based on the device characteristic information, and the binding instruction is an instruction requesting binding with the remote controller. The binding request information is generated according to the binding instruction and the device characteristic information, wherein the binding request information carries the device characteristic information and the binding instruction.

In this embodiment, by acquiring the device characteristic information of the television terminal and the binding instruction, and generating the binding request information according to the binding instruction and the device characteristic information, the device characteristic information of the television terminal can be sent to the remote controller through the binding request information, thereby further realizing accurate binding between the television terminal and the remote controller.

In some embodiments of the present application, the acquiring of the device characteristic information of the television terminal comprises:
Acquiring a hardware identifier, a media access control address, and a processor address of the television terminal.

Concatenating the hardware identifier, the media access control address, and the processor address to obtain concatenated data, and performing a preset-length digest processing on the concatenated data to obtain the device characteristic information.

In this embodiment, the television terminal comprises a plurality of identification information. The hardware identifier, the media access control address, and the processor address of the television terminal are acquired, wherein the hardware identifier, the media access control address, and the processor address are all identification information of the television terminal. The hardware identifier is a device number corresponding to the television terminal (i.e., a device ID); the media access control address is an address of a network device (i.e., a MAC address); and the processor address is a number of a central processing unit of the television terminal (i.e., a CPU ID). After obtaining the hardware identifier, the media access control address, and the processor address of the television terminal, the hardware identifier, the media access control address, and the processor address are concatenated to obtain concatenated data; thereafter, preset-length digest processing is performed on the concatenated data to obtain device characteristic information. Specifically, the device characteristic information may be obtained by mapping the concatenated data to output data of a preset length through a digest algorithm, wherein the output data is the digest and is also the device characteristic information in this embodiment. In addition, the identification information of the television terminal may further include a serial number of the television terminal, and concatenated data may be obtained by concatenating the serial number, the hardware identifier, the media access control address, and the processor address.

In this embodiment, by acquiring the hardware identifier, the media access control address, and the processor address of the television terminal, concatenating the hardware identifier, the media access control address, and the processor address to obtain concatenated data, and performing preset-length digest processing on the concatenated data to obtain device characteristic information, efficient processing of device characteristic information corresponding to the television terminal is achieved, and the efficiency of encryption processing of the device characteristic information by the remote controller is further improved.

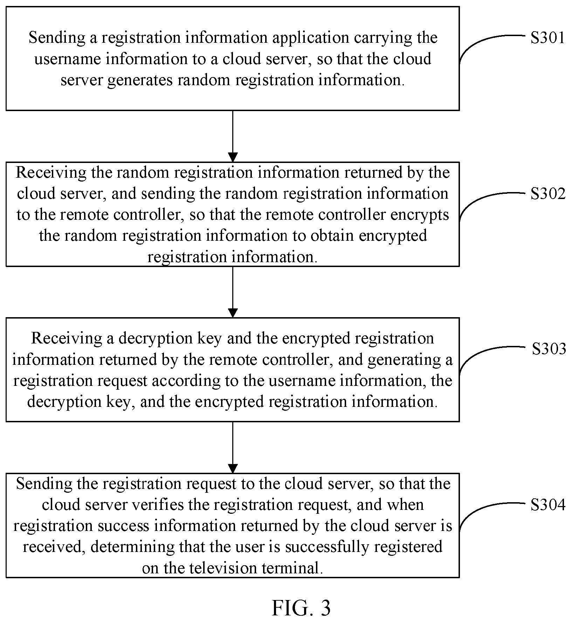

As shown in FIG. 3, FIG. 3 is a schematic flowchart of another embodiment of the television login method provided in the present application. In some embodiments of the present application, after determining that binding between the television terminal and the remote controller is completed, the method comprises:
S301, sending a registration information application carrying the username information to a cloud server, so that the cloud server generates random registration information.
S302, receiving the random registration information returned by the cloud server, and sending the random registration information to the remote controller, so that the remote controller encrypts the random registration information to obtain encrypted registration information.
S303, receiving a decryption key and the encrypted registration information returned by the remote controller, and generating a registration request according to the username information, the decryption key, and the encrypted registration information.
S304, sending the registration request to the cloud server, so that the cloud server verifies the registration request, and when registration success information returned by the cloud server is received, determining that the user is successfully registered on the television terminal.

In this embodiment, after the television terminal is successfully bound to the remote controller, a user may also be registered on the television terminal through the remote controller. Specifically, when the television terminal receives a registration instruction triggered based on the remote controller, the television terminal sends a registration information application carrying username information to the cloud server. The username information is account information selected by the user for registration, and the registration information application is a request sent by the television terminal to the cloud server for obtaining random registration information, wherein the username information is carried in the registration information application. When the cloud server receives the registration information application, the cloud server randomly generates a registration challenge string, that is, random registration information is obtained, wherein the registration challenge string is composed of a sequence of random numbers. The cloud server sends the random registration information to the television terminal. When the television terminal receives the random registration information, the television terminal sends the random registration information to the remote controller, and displays prompt information for quick registration on a screen of the television terminal. A user presses a quick registration key on the remote controller based on the prompt information. When the remote controller receives the random registration information, the remote controller encrypts the random registration information to obtain encrypted registration information. Specifically, the remote controller may obtain key identifier information from the television terminal, and then search for a key pair locally stored in the remote controller according to the key identifier information; the random registration information is encrypted based on a private key in the key pair to obtain encrypted registration information; thereafter, the remote controller returns the encrypted registration information and a decryption key in the key pair to the television terminal.

Further, when the television terminal sends the random registration information to the remote controller, the television terminal may also send device authentication information stored in the television terminal to the remote controller at the same time. When the remote controller receives the device authentication information, the remote controller performs legality authentication on the device authentication information, that is, determines whether the device authentication information is from a legitimate source. When the legality authentication of the device authentication information passes, the remote controller acquires a key pair, and encrypts the random registration information according to the key pair to obtain encrypted registration information.

When the television terminal receives the encrypted registration information and the decryption key returned by the remote controller, the television terminal generates a registration request according to the username information input by the user, the decryption key, and the encrypted registration information; thereafter, the television terminal sends the registration request to the cloud server. When the cloud server receives the registration request, the cloud server performs signature verification and decryption on the encrypted registration information according to the decryption key to obtain the random registration information sent by the television terminal; thereafter, the cloud server compares the decrypted random registration information with the random registration information corresponding to the username information cached in the server. If the decrypted random registration information is consistent with the cached random registration information, the cloud server determines that the registration request passes verification, stores the username information and the decryption key, and returns registration success information to the television terminal. If the decrypted random registration information is inconsistent with the cached random registration information, the cloud server determines that the registration request fails verification, and returns registration failure information to the television terminal. When the television terminal receives the registration success information returned by the cloud server, the television terminal determines that the user is successfully registered on the television terminal.

In this embodiment, efficient registration of username information is achieved through the remote controller and the television terminal, and the user is not required to input a verification code or a password, thereby improving the convenience of user registration.

In some embodiments of the present application, after sending the random login information returned by the cloud server to the remote controller of the television terminal, the method comprises:
Acquiring stored device authentication information and key identifier information, and sending the device authentication information and the key identifier information to the remote controller, so that the remote controller verifies the device authentication information, and when the verification is successful, the remote controller acquires a key pair based on the key identifier information, and encrypts the random login information according to the key pair to obtain encrypted login information.

In this embodiment, after the television terminal sends the random login information to the remote controller, the television terminal may also send stored device authentication information and key identifier information to the remote controller. When the remote controller receives the device authentication information and the key identifier information, the remote controller obtains a key pair locally stored in the remote controller according to the key identifier information, and performs signature verification and decryption on the device authentication information based on the key pair. Specifically, when the remote controller obtains the key pair based on the key identifier information, the remote controller obtains a decryption key in the key pair, performs signature verification and decryption on the device authentication information according to the decryption key to obtain digest information; compares the digest information with device characteristic information locally stored in the remote controller, and if the digest information is consistent with the locally stored device characteristic information, determines that the verification of the digest information by the remote controller passes. When the verification of the digest information by the remote controller passes, the remote controller encrypts the random login information and performs signature calculation based on a private key in the key pair to obtain encrypted login information, and returns the encrypted login information to the television terminal.

In this embodiment, by sending device authentication information from the television terminal to the remote controller, the remote controller verifies the device authentication information, thereby improving the security of information transmission and avoiding illegal login.

Embodiments of the present application further provide a television login method, applied to a remote controller, comprising:
Receiving random login information sent by a television terminal, and acquiring key identifier information.

Searching for a stored key pair according to the key identifier information, and encrypting the random login information based on the key pair to obtain encrypted login information.

Returning the encrypted login information to the television terminal.

In this embodiment, a television login method applied to a remote controller is further provided. Specifically, when the remote controller receives binding request information sent by the television terminal, the remote controller generates a key pair and key identifier information corresponding to the key pair; the remote controller encrypts the binding request information according to the key pair to generate device authentication information. Thereafter, the remote controller returns the device authentication information and the key identifier information to the television terminal, thereby completing binding with the television terminal.

Thereafter, when the remote controller receives random login information sent by the television terminal, the remote controller acquires key identifier information, and searches for a stored key pair according to the key identifier information; the remote controller encrypts the random login information based on the key pair to obtain encrypted login information, and returns the encrypted login information to the television terminal, so that the television terminal generates a login request according to the encrypted login information and the username information.

The television login method provided in this embodiment is applied to a remote controller. By binding the remote controller with the television terminal, and when receiving random login information sent by the television terminal, acquiring key identifier information and searching for a key pair stored in the remote controller according to the key identifier information; thereafter, encrypting the random login information based on the key pair to obtain encrypted login information, and returning the encrypted login information to the television terminal, so that the television terminal generates a login request according to the encrypted login information and the username information, login of the television by the remote controller can be realized without requiring the user to input a password, thereby improving the efficiency of television login and ensuring the legitimacy of login of the television terminal via the remote controller.

In order to facilitate better implementation of the television login method provided in the embodiments of the present application, embodiments of the present application further provide an apparatus based on the above television login method. The meanings of terms are the same as those in the above television login method, and specific implementation details may refer to the descriptions in the method embodiments.

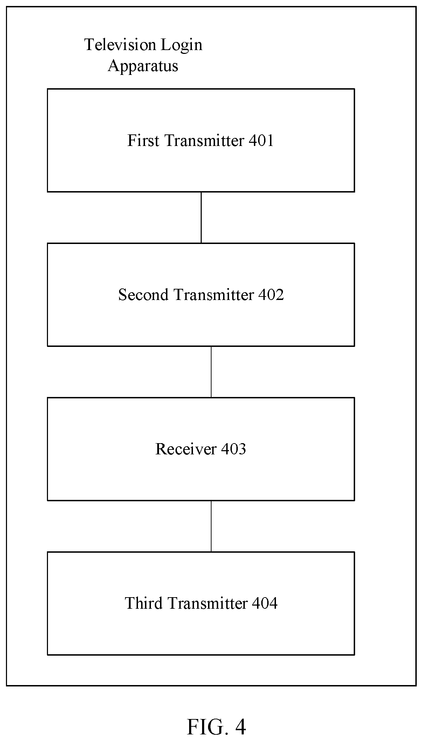

For example, as shown in FIG. 4, the television login apparatus may comprise: a first transmitter 401, a second transmitter 402, a receiver 403, and a third transmitter 404.

The first transmitter 401 is configured to send a login information application carrying username information to a cloud server, so that the cloud server generates random login information according to the login information application.

The second transmitter 402 is configured to send the random login information returned by the cloud server to a remote controller of the television terminal, so that the remote controller encrypts the random login information to obtain encrypted login information.

The receiver 403 is configured to receive the encrypted login information returned by the remote controller, and generate a login request according to the username information and the encrypted login information.

The third transmitter 404 is configured to send the login request to the cloud server, so that the cloud server verifies the login request, and when login success information returned by the cloud server is received, determining that login of the username information is successful.

In one embodiment of the present application, the above television login apparatus further comprises:
A connection module, configured to establish a communication connection between the television terminal and the remote controller, and generate binding request information.

A binding request module, configured to send the binding request information to the remote controller, so that the remote controller generates device authentication information corresponding to the binding request information when receiving the binding request information.

A binding module, configured to receive the device authentication information returned by the remote controller, and determine that binding between the television terminal and the remote controller is completed.

In one embodiment of the present application, the above connection module comprises:
An acquiring unit, configured to acquire device characteristic information of the television terminal and a binding instruction.

A generating unit, configured to generate the binding request information according to the binding instruction and the device characteristic information.

In one embodiment of the present application, the above acquiring unit comprises:
An acquiring sub-unit, configured to acquire a hardware identifier, a media access control address, and a processor address of the television terminal.

A processing unit, configured to concatenate the hardware identifier, the media access control address, and the processor address to obtain concatenated data, and perform preset-length digest processing on the concatenated data to obtain the device characteristic information.

In one embodiment of the present application, the above television login apparatus further comprises:
A first registration request module, configured to send a registration information application carrying the username information to a cloud server, so that the cloud server generates random registration information.

A second registration request module, configured to send the random registration information to the remote controller, so that the remote controller encrypts the random registration information to obtain encrypted registration information.

A registration generation module, configured to receive a decryption key and the encrypted registration information returned by the remote controller, and generate a registration request according to the username information, the decryption key, and the encrypted registration information.

A third registration request module, configured to send the registration request to the cloud server, so that the cloud server verifies the registration request, and when registration success information returned by the cloud server is received, determine that the user is successfully registered on the television terminal.

In one embodiment of the present application, the above television login apparatus further comprises:
A verification module, configured to acquire stored device authentication information and key identifier information, and send the device authentication information and the key identifier information to the remote controller, so that the remote controller verifies the device authentication information, and when the verification is successful, the remote controller acquires a key pair based on the key identifier information, and encrypts the random login information according to the key pair to obtain encrypted login information.

The television login apparatus may further comprise: a login module, an encryption module, and a return module:
The login module is configured to receive random login information sent by a television terminal, and acquire key identifier information.

The encryption module is configured to search for a stored key pair according to the key identifier information, and encrypt the random login information based on the key pair to obtain encrypted login information.

The return module is configured to return the encrypted login information to the television terminal.

The television login apparatus proposed in the present application realizes rapid login of the television terminal via the remote controller, without requiring the user to input a password or a verification code, and improves the login speed of the user on the television terminal while ensuring login security, thereby enhancing the convenience of user login.

In specific implementation, the above modules may be implemented as independent entities, or may be arbitrarily combined and implemented as the same or several entities. The specific implementation manners and corresponding beneficial effects of the above modules may refer to the foregoing method embodiments, and will not be described in detail herein.

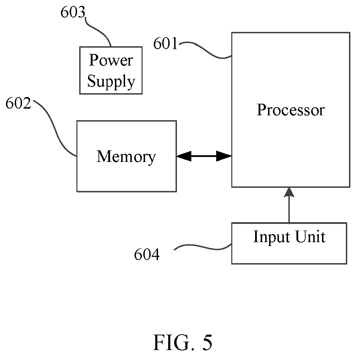

Embodiments of the present application further provide an electronic device. The electronic device may be a server or a terminal, and as shown in FIG. 5, a schematic structural diagram of the electronic device involved in the embodiments of the present application is illustrated. Specifically:
The electronic device may comprise a processor 601 having one or more processing cores, a memory 602 having one or more computer storage media, a power supply 603, and an input unit 604 and other components. Those skilled in the art may understand that the structure of the electronic device shown in FIG. 5 does not constitute a limitation on the electronic device, and the electronic device may include more or fewer components than those shown, or combine certain components, or have different component arrangements.

The processor 601 is a control center of the electronic device, and connects various parts of the entire electronic device by using various interfaces and lines. By running or executing computer programs and/or modules stored in the memory 602, and calling data stored in the memory 602, the processor 601 executes various functions of the electronic device and processes data. Optionally, the processor 601 may comprise one or more processing cores; preferably, the processor 601 may integrate an application processor and a modem processor, wherein the application processor mainly processes an operating system, a user interface, and application programs, and the modem processor mainly processes wireless communication. It can be understood that the above modem processor may also not be integrated into the processor 601.

The memory 602 may be configured to store computer programs and modules, and the processor 601 executes various functional applications and data processing by running the computer programs and modules stored in the memory 602. The memory 602 may mainly comprise a program storage area and a data storage area, wherein the program storage area may store an operating system, computer programs required for at least one function (such as a sound playback function, an image playback function, and the like); and the data storage area may store data created according to the use of the electronic device. In addition, the memory 602 may comprise a high-speed random access memory, and may also comprise a non-volatile memory, such as at least one magnetic disk storage device, a flash memory device, or other non-volatile solid-state storage devices. Correspondingly, the memory 602 may further comprise a memory controller to provide access of the processor 601 to the memory 602.

The electronic device further comprises a power supply 603 for supplying power to the various components. Preferably, the power supply 603 may be logically connected to the processor 601 through a power management system, so as to implement functions such as charge management, discharge management, and power consumption management through the power management system. The power supply 603 may further comprise any component such as one or more direct current or alternating current power sources, a rechargeable system, a power failure detection circuit, a power converter or inverter, and a power status indicator.

The electronic device may further comprise an input unit 604. The input unit 604 may be configured to receive input digital or character information, and generate signal inputs related to user settings and function control such as a keyboard, a mouse, a joystick, an optical device, or a trackball.

Although not shown, the electronic device may further comprise a display unit and the like, which will not be described in detail herein. Specifically, in this embodiment, the processor 601 in the electronic device loads executable files corresponding to processes of one or more computer programs into the memory 602 according to the following instructions, and the processor 601 runs the computer programs stored in the memory 602, thereby implementing various functions, such as:

Sending a login information application carrying username information to a cloud server, so that the cloud server generates random login information according to the login information application.

Sending the random login information returned by the cloud server to a remote controller of the television terminal, so that the remote controller encrypts the random login information to obtain encrypted login information.

Receiving the encrypted login information returned by the remote controller, and generating a login request according to the username information and the encrypted login information.

Sending the login request to the cloud server, so that the cloud server verifies the login request, and when login success information returned by the cloud server is received, determining that login of the username information is successful.

The electronic device proposed in the present application realizes rapid login of the television terminal via the remote controller, without requiring the user to input a password or a verification code, and improves the login speed of the user on the television terminal while ensuring login security, thereby enhancing the convenience of user login.

The specific implementation manners and corresponding beneficial effects of the above operations may refer to the detailed description of the television login method above, and will not be described in detail herein.

Those of ordinary skill in the art may understand that all or part of the steps in the various methods of the above embodiments may be completed by a computer program, or may be completed by controlling related hardware through a computer program. The computer program may be stored in a computer storage medium, and may be loaded and executed by a processor.

For this purpose, embodiments of the present application provide a computer storage medium, wherein a computer program is stored, and the computer program can be loaded by a processor to perform the steps of any one of the television login methods provided in the embodiments of the present application. For example, the computer program may perform the following steps:
Sending a login information application carrying username information to a cloud server, so that the cloud server generates random login information according to the login information application.

Sending the random login information returned by the cloud server to the remote controller, so that the remote controller of the television terminal encrypts the random login information to obtain encrypted login information.

Receiving the encrypted login information returned by the remote controller, and generating a login request according to the username information and the encrypted login information.

Sending the login request to the cloud server, so that the cloud server verifies the login request, and when login success information returned by the cloud server is received, determining that login of the username information is successful.

The computer storage medium proposed in the present application realizes rapid login of the television terminal via the remote controller, without requiring the user to input a password or a verification code, and improves the login speed of the user on the television terminal while ensuring login security, thereby enhancing the convenience of user login.

The specific implementation manners and corresponding beneficial effects of the above operations may refer to the foregoing embodiments, and will not be described in detail herein.

The computer storage medium may comprise: a read-only memory (ROM, Read Only Memory), a random access memory (RAM, Random Access Memory), a magnetic disk, an optical disk, or the like.

Since the computer program stored in the computer storage medium can perform the steps of any one of the television login methods provided in the embodiments of the present application, the beneficial effects that can be achieved by any one of the television login methods provided in the embodiments of the present application can be realized. For details, reference may be made to the foregoing embodiments, and will not be described in detail herein.

According to one aspect of the present application, a computer program product or a computer program is provided, wherein the computer program product or the computer program comprises computer instructions, and the computer instructions are stored in a computer storage medium. A processor of a computer device reads the computer instructions from the computer storage medium, and executes the computer instructions, so that the computer device performs the above television login method.

The above provides a detailed description of a television login method, an apparatus, an electronic device, and a computer storage medium provided in the embodiments of the present application. Specific examples are used herein to illustrate the principles and implementations of the present application, and the descriptions of the above embodiments are only used to help understand the method and core ideas of the present application. Meanwhile, for those skilled in the art, based on the idea of the present application, there may be changes in specific implementation manners and application scope. In summary, the content of this specification should not be construed as a limitation of the present application.

## Claims

1. A television login method, applied to a television terminal, wherein the method comprises:
sending a login information application carrying username information to a cloud server, so that the cloud server generates random login information according to the login information application;
sending the random login information returned by the cloud server to a remote controller of the television terminal, so that the remote controller encrypts the random login information to obtain encrypted login information;
receiving the encrypted login information returned by the remote controller, and generating a login request according to the username information and the encrypted login information;
sending the login request to the cloud server, so that the cloud server verifies the login request, and when login success information returned by the cloud server is received, determining that login of the username information is successful.

2. The television login method according to claim 1, wherein, before sending the login information application carrying username information to the cloud server, the method further comprises:
establishing a communication connection between the television terminal and the remote controller, and generating binding request information;
sending the binding request information to the remote controller, so that the remote controller generates device authentication information corresponding to the binding request information when receiving the binding request information;
receiving the device authentication information returned by the remote controller, and determining that binding between the television terminal and the remote controller is completed.

3. The television login method according to claim 2, wherein generating the binding request information comprises:
acquiring device characteristic information of the television terminal and a binding instruction;
generating the binding request information according to the binding instruction and the device characteristic information.

4. The television login method according to claim 3, wherein acquiring the device characteristic information of the television terminal comprises:
acquiring a hardware identifier, a media access control address, and a processor address of the television terminal;
concatenating the hardware identifier, the media access control address, and the processor address to obtain concatenated data, and performing a preset-length digest processing on the concatenated data to obtain the device characteristic information.

5. The television login method according to claim 4, wherein concatenating the hardware identifier, the media access control address, and the processor address to obtain concatenated data, and performing a preset-length digest processing on the concatenated data to obtain the device characteristic information comprises:
acquiring a serial number of the television terminal;
concatenating the serial number, the hardware identifier, the media access control address, and the processor address to obtain concatenated data;
mapping the concatenated data to output data of a preset length according to a preset digest algorithm, and determining the output data as the device characteristic information.

6. The television login method according to claim 2, wherein, after determining that binding between the television terminal and the remote controller is completed, the method further comprises:
sending a registration information application carrying the username information to a cloud server, so that the cloud server generates random registration information;
receiving the random registration information returned by the cloud server, and sending the random registration information to the remote controller, so that the remote controller encrypts the random registration information to obtain encrypted registration information;
receiving a decryption key and the encrypted registration information returned by the remote controller, and generating a registration request according to the username information, the decryption key, and the encrypted registration information;
sending the registration request to the cloud server, so that the cloud server verifies the registration request, and when registration success information returned by the cloud server is received, determining that the user is successfully registered on the television terminal.

7. The television login method according to claim 1, wherein, after sending the random login information returned by the cloud server to the remote controller of the television terminal, the method further comprises:
acquiring stored device authentication information and key identifier information, and sending the device authentication information and the key identifier information to the remote controller, so that the remote controller verifies the device authentication information, and when the verification is successful, the remote controller acquires a key pair based on the key identifier information, and encrypts the random login information according to the key pair to obtain encrypted login information.

8. A television login method, applied to a remote controller, wherein the method comprises:
receiving random login information sent by a television terminal, and acquiring key identifier information;
searching for a stored key pair according to the key identifier information, and encrypting the random login information based on the key pair to obtain encrypted login information;
returning the encrypted login information to the television terminal.

9. The television login method according to claim 8, wherein, before receiving the random login information sent by the television terminal and acquiring the key identifier information, the method further comprises:
receiving random registration information and device authentication information sent by the television terminal;
if legality authentication of the device authentication information passes, encrypting the random registration information according to a stored key pair to obtain encrypted registration information;
returning the encrypted registration information and a decryption key to the television terminal.

10. A television login apparatus, wherein the apparatus comprises:
a first transmitter, configured to send a login information application carrying username information to a cloud server, so that the cloud server generates random login information according to the login information application;
a second transmitter, configured to send the random login information returned by the cloud server to a remote controller of a television terminal, so that the remote controller encrypts the random login information to obtain encrypted login information;
a receiver, configured to receive the encrypted login information returned by the remote controller, and generate a login request according to the username information and the encrypted login information;
a third transmitter, configured to send the login request to the cloud server, so that the cloud server verifies the login request, and when login success information returned by the cloud server is received, determine that login of the username information is successful.

11. The television login apparatus according to claim 10, wherein the first transmitter is further configured, before sending the login information application carrying username information to the cloud server, to:
establish a communication connection between the television terminal and the remote controller, and generate binding request information;
send the binding request information to the remote controller, so that the remote controller generates device authentication information corresponding to the binding request information when receiving the binding request information;
receive the device authentication information returned by the remote controller, and determine that binding between the television terminal and the remote controller is completed.

12. The television login apparatus according to claim 11, wherein the first transmitter is further configured to generate binding request information, comprising:
acquiring device characteristic information of the television terminal and a binding instruction;
generating the binding request information according to the binding instruction and the device characteristic information.

13. The television login apparatus according to claim 12, wherein the first transmitter is further configured to acquire the device characteristic information of the television terminal, comprising:
acquiring a hardware identifier, a media access control address, and a processor address of the television terminal;
concatenating the hardware identifier, the media access control address, and the processor address to obtain concatenated data, and performing a preset-length digest processing on the concatenated data to obtain the device characteristic information.

14. The television login apparatus according to claim 11, wherein the first transmitter is further configured, after determining that binding between the television terminal and the remote controller is completed, to:
send a registration information application carrying the username information to a cloud server, so that the cloud server generates random registration information;
receive the random registration information returned by the cloud server, and send the random registration information to the remote controller, so that the remote controller encrypts the random registration information to obtain encrypted registration information;
receive a decryption key and the encrypted registration information returned by the remote controller, and generate a registration request according to the username information, the decryption key, and the encrypted registration information;
send the registration request to the cloud server, so that the cloud server verifies the registration request, and when registration success information returned by the cloud server is received, determine that the user is successfully registered on the television terminal.

15. The television login apparatus according to claim 10, wherein the second transmitter is further configured, after sending the random login information returned by the cloud server to the remote controller of the television terminal, to:
acquire stored device authentication information and key identifier information, and send the device authentication information and the key identifier information to the remote controller, so that the remote controller verifies the device authentication information, and when the verification is successful, the remote controller acquires a key pair based on the key identifier information, and encrypts the random login information according to the key pair to obtain encrypted login information.

16. The television login apparatus according to claim 10, wherein the television login apparatus is further configured to:
receive random login information sent by a television terminal, and acquire key identifier information;
search for a stored key pair according to the key identifier information, and encrypt the random login information based on the key pair to obtain encrypted login information;
return the encrypted login information to the television terminal.

17. An electronic device, comprising a processor and a memory, wherein the memory stores a computer program, and the processor is configured to run the computer program stored in the memory to perform the steps of the television login method according to any one of claims 1 to 9.

18. A computer storage medium, wherein the computer storage medium stores a computer program, and the computer program is adapted to be loaded by a processor to perform the steps of the television login method according to any one of claims 1 to 9.
